# FASCICULE DE BREVET EUROPEEN

(11) **EP 0 289 075 B1**
(45) Date de publication et mention de la délivrance du brevet: **17.08.1994**
(21) Numéro de dépôt: 88200731.3
(22) Date de dépôt: 15.04.1988
(51) Int. Cl.: H02K 19/06, H02K 19/10, H02P 7/00, H02K 19/24

(54) **Machine électrique à réluctance**
Reluktanz elektrische Maschine
Reluctance electric machine

(30) Priorité: 30.04.1987 IT 6737487
(43) Date de publication de la demande: 02.11.1988
(73) Titulaire: Fratta, Antonino, Dr. Ing., I-10144 Torino (IT)
(72) Inventeur: Fratta, Antonino, Dr.-Ing., I-10143 Torino (IT)
(74) Mandataire: Patrito, Pier Franco, Dr. Ing.

(56) Documents cités:
- DE-A- 2 937 351
- GB-A- 1 183 630
- REVUE DE PHYSIQUE APPLIQUEE, vol. 15, no. 2, février 1980, Paris; M. PAKDEL et al.: "Etude d'un moteur à reluctance à feuilletage axial", pages 331-339

## Description

La présente invention concerne une machine électrique à réluctance, avec un rotor comprenant des éléments en matériau ferromagnétique, inséré dans un stator pourvu d'enroulements électriques et séparé de lui par un entrefer.

Les machines électriques à réluctance sont des machines synchrones comprenant un stator avec enroulement distribué, à deux ou plusieurs pôles, habituellement polyphasé, substantiellement similaire de celui d'une machine à induction, et un rotor dépourvu d'enroulements et d'aimants permanents, ayant un nombre de pôles correspondant à celui du stator, et constructivement anisotropique. L'anisotropie du rotor est réalisée de sorte qu'il présente, pour chaque pair de pôles de la machine, une direction de réluctance minimale, dite axe direct, et une direction de réluctance maximale, située à 90 degrés électriques de l'axe direct, dite axe de quadrature. Lorsqu'une force magnétomotrice est générée dans les enroulements du stator, convenablement alimentés, le rotor a tendance à porter son propre axe direct de réluctance minimale en alignement avec la force magnétomotrice générée par le stator, et cela donne lieu à un couple mécanique qui peut être utilisé. En particulier, lorsque le stator produit un champ rotatif, ce couple peut maintenir le rotor en rotation synchrone par rapport au champ, avec un angle de déphasage, compris entre l'axe direct et l'axe qui représente le champ de stator, lequel dépend en ampleur et signe du couple lui-même. Le couple utile qui peut être ainsi généré dépend du degré d'anisotropie du rotor, et donc on a intérêt à rendre maximal le rapport entre la perméance du rotor suivant les axes directs et sa perméance suivant les axes de quadrature. Cela peut être obtenu de différentes façons, en particulier en fabriquant le rotor en forme massive avec des pôles saillants, ou bien par des empilages de tôles ferromagnétiques profilées superposées suivant la direction de l'axe de rotation (lamination transversale: voir par exemple le brevet US-2,769,108), ou bien encore en insérant dans le rotor des tôles ferromagnétiques opportunément disposées, ayant une direction parallèle de l'axe de rotation (lamination axiale: voir par exemple GB-1,114,562).

Les machines électriques à réluctance ont été employées jusqu'ici en contrôlant en tension l'alimentation du stator, et leur démarrage a été obtenu en insérant dans le rotor des éléments fonctionnant comme une cage d'écureuil (voir par exemple US-2,769,108). De cette façon la machine démarre comme un moteur asynchrone par l'action des éléments en cage d'écureuil et, lorsque le rotor atteint une vitesse de rotation proche de celle du champ rotatif produit par le stator, l'anisotropie du rotor produit un enclanchement en raison duquel le fonctionnement se continue avec un caractère synchrone.

Conformément à ce mode d'emploi, dans le développement de ces machines électriques on a cherché jusqu'ici d'augmenter ledit rapport de perméance surtout en augmentant la réluctance du rotor suivant les axes de quadrature, en réalisant des coupes ou des insertions de matériaux non ferromagnétiques disposées de sorte à couper les lignes de flux qui se développent suivant les axes de quadrature, mais en ayant soin de réduire le moins possible la section utile de matériau ferromagnétique disponible pour les lignes de flux se développant suivant les axes directes, de sorte à ne pas donner lieu, pendant le fonctionnement, à une saturation du matériau ferromagnétique du rotor. Une telle exigence vient du fait qu'une saturation du matériau ferromagnétique du rotor serait préjudiciable dans la phase de démarrage en fonctionnement asynchrone, tandis qu'elle ne serait pas utile pendant le fonctionnement synchrone. De ces prémisses viennent des difficultés et des frais élevés de fabrication, un facteur de puissance relativement réduit et un rapport excessivement bas entre le couple fourni et les dimensions de la machine. Ces inconvénients limitent la diffusion des machines à réluctance.

La présente invention se pose le problème d'ouvrir des nouveaux domaines d'application aux machines électriques à réluctance, ainsi que de donner la possibilité de réaliser des machines ayant des caractéristiques élevées et de fabrication simple et économique, en partant du principe d'employer ces machines avec un contrôle électronique vectoriel du courant d'alimentation. Un tel genre d'alimentation contrôlée est bien connu en soi pour d'autres types de machines électriques, mais il n'a pas été employé jusqu'ici en association avec des machines à réluctance expressément projetées pour ce genre d'alimentation. Une conséquence essentielle de l'application de ce principe est qu'on ne rencontre plus le problème d'une phase de démarrage en fonctionnement asynchrone, et donc tombent les exigences, d'un côté, de disposer des élements en cage d'écureuil, et d'autre côté d'éviter la saturation du matériau ferromagnétique du rotor.

Les documents GB-A-1.183.630 et DE-A-2.937.351 décrivent des machines électriques à réluctance, avec un rotor comprenant des éléments en matériau ferromagnétique, ledit rotor étant inséré dans un stator pourvu d'enroulements électriques et séparé de lui par un entrefer, la section des éléments en matériau ferromagnétique du rotor étant partialisée par l'insertion d'éléments en matériau non ferromagnétique.

En partant de ces prémisses, le principe ultérieur sur lequel repose l'invention est de porter systématiquement le matériau ferromagnétique du rotor, dans les conditions de fonctionnement à pleine charge, au moins dans les régions confinant avec l'entrefer de la machine, en des conditions de saturation magnétique, toutefois sans que des saturations magnétiques localisées appréciables se produisent dans le matériau ferromagnétique constituant le stator, ce qui porterait à des grandes pertes d'énergie, à une certaine ondulation du couple produit et à des sollicitations mécaniques indésirées.

Ces buts sont atteints, suivant l'invention, dans une machine électrique à réluctance, avec un rotor comprenant des éléments en matériau ferromagnétique, inséré dans un stator pourvu d'enroulements électriques et séparé de lui par un entrefer, et dans lequel la section des éléments de matériau ferromagnétique du rotor, au moins à proximité de l'entrefer, est partialisée par l'insertion d'éléments de matériau non ferromagnétique, par le fait que lesdits éléments sont disposés de sorte à réaliser un rapport entre la section de matériau ferromagnétique et la section totale non supérieur à 0,6, avec un rapport entre au moins une dimension linéaire des éléments de matériau non ferromagnétique, gîsant dans un plan tangent à l'entrefer, et l'épaisseur de l'entrefer de la machine, non supérieur à 5.

Grâce au fait que, dans cette disposition caractéristique, la section du matériau ferromagnétique disponible pour le flux d'induction suivant les axes directs ne dépasse pas les 6/10 de la section de matériau présente, lorsqu'on produit une valeur normale (tel à ne pas donner lieu à saturation) de l'induction dans le matériau ferromagnétique du stator, on obtient une saturation du matériau ferromagnétique du rotor, lequel donc, pour les augmentations ultérieures du flux, se conduit comme un rotor à aimants permanents. D'autre côté, grâce au fait que la dimension des éléments de matériau non ferromagnétique présents dans le rotor ne dépasse pas, à proximité de l'entrefer et dans au moins une direction gîsant dans un plan tangent à l'entrefer, cinq fois l'épaisseur de ce dernier, on ne produit pas dans les pôles du stator des concentrations localisées d'induction appréciables, et donc le matériau du stator n'est pas porté localement en des conditions de saturation.

L'on doit remarquer qu'une machine ayant les caractéristiques indiquées, conformes à l'invention, n'aurait pas un comportement favorable sous une alimentation contrôlée en tension, tant pis en des conditions de fonctionnement asynchrone, et c'est pour cette raison qu'il est à propos que pour cette machine soit prévu un fonctionnement avec alimentation sous contrôle vectoriel du courant d'alimentation, et donc un fonctionnement toujours synchrone.

Constructivement, les caractéristiques suivant l'invention peuvent être réalisées dans un rotor en des modes différents. Un premier mode, approprié pour un rotor à pôles saillants formé par un matériau ferromagnétique massif, consiste à réaliser, sur les surfaces du rotor qui font face à l'entrefer, nombre de petites cavités, comme par exemple des minces fraisages, qui donnent lieu à la partialisation désirée de la section du matériau ferromagnétique. Un autre mode, approprié pour un rotor à lamination axiale, consiste à réaliser les empilages laminés du rotor par des tôles de matériau ferromagnétique alternées à des couches de matériau non ferromagnétique, avec une épaisseur des couches de matériau non ferromagnétique non inférieur aux 2/3 de l'épaisseur des tôles de matériau ferromagnétique.

Comme déjà dit, la saturation d'au moins une partie du matériau ferromagnétique du rotor est désirée comme une caractéristique de l'invention dans les conditions de fonctionnement à pleine charge, mais naturellement elle peut ne pas se vérifier en des conditions de fonctionnement à charge réduite, à savoir lorsque la machine est défluxée. Toutefois, même dans l'utilisation des machines suivant l'invention en des applications comportant aussi ou même principalement des conditions de travail avec flux magnétique réduit, telles à ne pas engendrer des phénomènes de saturation, avec une géométrie à lamination axiale la forte partialisation donne lieu à un facteur de qualité considérable dans l' accouplement entre la machine et le circuit qui lui assure l'alimentation. Cette caractéristique d'une lamination axiale très partialisée est due à la haute réluctance qu'on obtient suivant l'axe de quadrature, laquelle est à peu près proportionnelle au facteur de partialisation, et n'est pas très sensible à la saturation. Au contraire, avec une structure massive, la réluctance suivant l'axe de quadrature résulte suffisammant grande, pour des petites variations du champ, seulement en présence de la saturation du matériau ferromagnétique du rotor, et donc elle devient bien plus faible lorsque le flux de machine est réduit.

Ces caractéristiques et d'autres de l'objet de l'invention ressortiront plus clairement de la suivante description de certaines formes de réalisation, décrites à titre d'exemples non limitatifs et schématiquement représentées dans les dessins annexés, dans lesquels:
Fig. 1 montre schématiquement la section d'un rotor massif partialisé en correspondance de l'entrefer;
Fig. 2 montre à une échelle plus grande le détail II de la figure 1;
Fig. 3 montre schématiquement la section d'un rotor à lamination axiale partialisée;
Fig. 4 montre à une échelle plus grande le détail IV de la figure 3;
Figs. 5 et 6 montrent schématiquement deux modifications à la forme de réalisation suivant la figure 3;
Fig. 7 montre schématiquement une forme de réalisation combinée, dans laquelle la partialisation est réalisée en partie sur des pièces massives et en partie moyennant lamination ou subdivision axiale;
Fig. 8 montre en section transversale un exemple de structure de stator qu'on peut utiliser avec un rotor suivant n'importe quelle des figures précédentes; et
Fig. 9 montre le diagramme à blocs d'un circuit électronique qu'on peut employer pour le contrôle vectoriel du courant alimentant la machine.

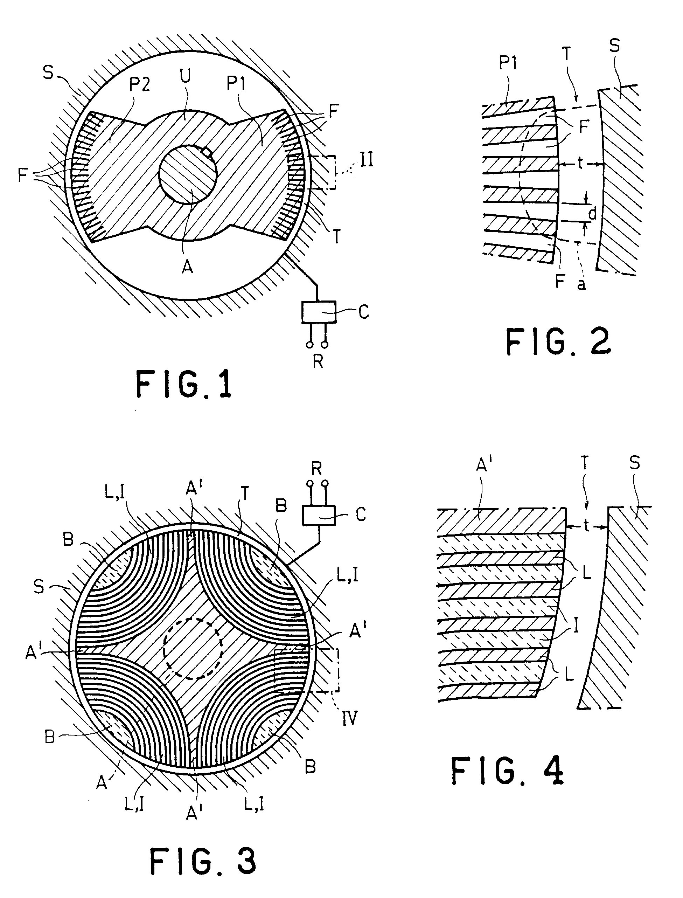

Dans les figures 1 à 7 des dessins, la structure du stator S n'est pas spécifiée, parce qu'on peut employer tout type de stator, connu pour le genre de machines considéré ou pour d'autres genres de machines électriques synchrones ou asynchrones. Dans la plupart des cas, mais sans obligation, il s'agira d'une structure avec enroulement distribué polyphasé. On doit remarquer que la structure du stator, en soi, n'a aucune relation avec l'application de l'invention.

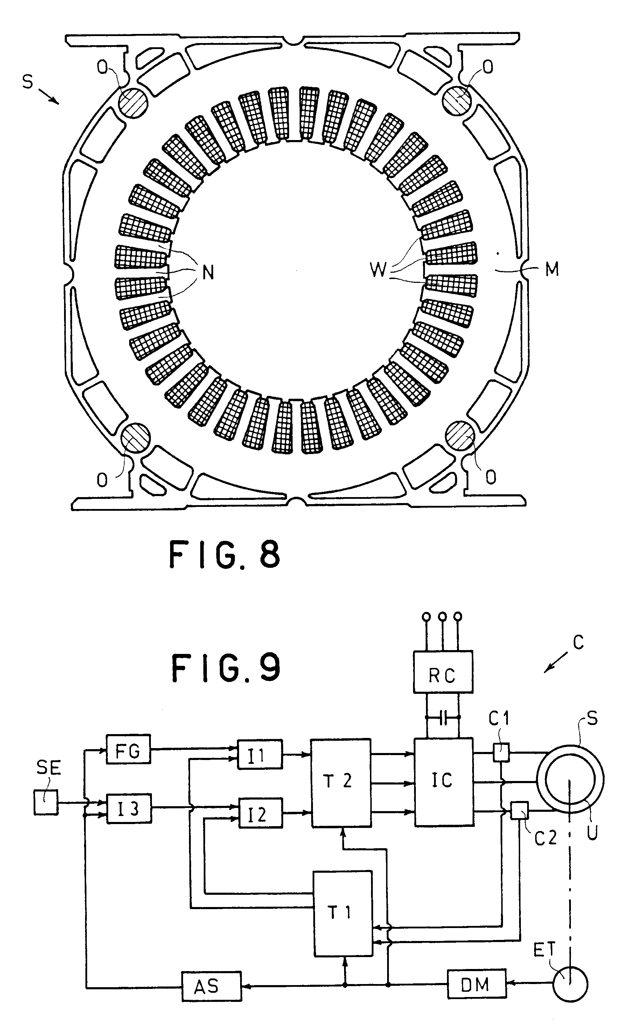

Toutefois, pour information plus complète, un exemple de la structure d'un stator S qu'on peut employer pour la machine selon l'invention est donné dans la figure. 8. Le stator S comprend un empilage de tôles ferromagnétiques M formant un circuit magnétique, assemblé par des boulons O. Chaque tôle ferromagnétique M forme nombre de dents N et, entre chaque paire de dents adjacentes, une gorge dans laquelle sont insérés des conducteurs formant un enroulement électrique polyphasé distribué W.

On a schématiquement indiqué dans les figures 1 et 3 que le stator S est connecté à un circuit d'alimentation C interposé entre le stator S et un réseau d'alimentation R. Le circuit d'alimentation C doit être entendu comme un circuit électronique de contrôle vectoriel (en module et en phase) du courant d'alimentation du stator S. La structure du circuit C n'est pas spécifiée dans lesdites figures parce que de tels circuits de contrôle sont en soi bien connus dans l'application à d'autres genres de machines électriques et, en général, tout circuit de ce type peut être employé suivant le principe de l'invention, laquelle, sous ce point de vue, se caractérise seulement par l'application particulière suivant laquelle un circuit C de contrôle vectoriel du courant d'alimentation, connu en soi, est appliqué au contrôle du courant d'alimentation du stator S, lui-même en soi connu, d'une machine électrique à réluctance spécialement projetée pour ce type d'alimentation.

Toutefois, pour information plus complète, un exemple de circuit électronique C approprié pour alimenter la machine selon l'invention est montré par le diagramme à blocs de la figure 9. Le circuit C comprend un rectificateur RC alimenté par le réseau courant alternatif R et alimentant un inverseur IC qui, à son tour, alimente le stator S de la machine électrique. Le rectificateur RC peut comprendre un chopper élévateur pour récupération d'énergie vers le réseau R ou pour dissipation sur une résistance de freinage. L'inverseur IC peut comprendre des transistors et fonctionner sur tous les quatre quadrants. Le rotor U de la machine est mécaniquement connecté à un transducteur angulaire ET, par exemple un resolver, et le signal produit par le transducteur ET est envoyé à un démodulateur DM dont le signal de sortie, qui représente la position du rotor, est adressé à des circuits de transformation T1 et T2 et à un circuit AS calculateur de la vitesse de rotation du rotor. Le circuit de transformation T1 reçoit aussi, par des transducteurs de courant C1, C2, deux signaux représentant les courants qui alimentent le stator S, et donc les coordonnées de stator, et il transforme les valeurs de courant de coordonnées de stator en coordonnées rotatives, qui sont envoyées à des régulateurs proportionnels intégrateurs I1, I2. Le régulateur proportionnel intégrateur I1 reçoit aussi le signal de sortie d'un générateur de fonction FG, contrôlé par la sortie du circuit calculateur de vitesse AS et produisant un signal en fonction de la vitesse de la machine. Le régulateur proportionnel intégrateur I2 reçoit aussi le signal de sortie d'un autre régulateur proportionnel intégrateur I3 qui, à son tour, est contrôlé par le signal de vitesse venant du circuit calculateur AS et par le signal d'un circuit SE pour l'introduction de la valeur désirée de vitesse. Enfin, les signaux de sortie des deux régulateurs proportionnels intégrateurs I1 et I2, avec la sortie du démodulateur DM, sont envoyés au circuit de transformation T2 qui travaille en transformant les tensions appliquées de coordonnées rotatives en des coordonnées de stator, par lesquelles il contrôle le circuit inverseur IC qui alimente le stator S de la machine.

Dans les figures des dessins, T indique l'entrefer existant entre la surface interne du stator S et la surface de jupe du rotor U; l'épaisseur de cet entrefer T est indiquée par t dans les figures 2 et 4.

Faisant référence aux figures 1 et 2, le rotor U est indiqué sous une forme comprenant deux pôles saillants P1 et P2, "en papillon", diamétralement opposés par rapport à un arbre A qui porte le rotor. La caractéristique portée par l'invention à ce rotor consiste en ce que les pôles P1 et P2, dans leur surface faisant face à l'entrefer T, montrent nombre de petites cavités, telles que des fraisages ou des trous F, mieux représentées dans la figure 2, lesquelles constituent des éléments en matériau non ferromagnétique, et donc partialisent la section des pôles P1 et P2 du rotor qui est disponible pour le passage du flux magnétique. Les cavités F occupent dans leur ensemble au moins le 40% de la section des pôles dans lesquels elles sont pratiquées. Une dimension d des cavités F qui s'étend dans un plan tangent à l'entrefer T (plus précisément leur largeur, lorsqu'il s'agit de freisages, ou le diamètre, lorsqu'il s'agit de trous circulaires) ne dépasse pas cinq fois l'épaisseur t de l'entrefer T.

La présence des cavités F a deux effets. D'abord, la section du matériau ferromagnétique est réduite, en correspondance des cavités, par rapport à la section correspondante du stator S qui lui fait face, et donc la densité des lignes de flux de l'induction magnétique parcourant le matériau ferromagnétique du rotor dans la région considérée est bien plus grande que la densité des lignes de flux de l'induction magnétique parcourant le stator qui fait face. En vue d'un bon rendement et d'un réchauffement réduit, dans le stator on doit engendrer une induction magnétique telle à ne pas donner lieu à saturation, par exemple une induction égale à 0,7 fois la valeur de saturation du matériau constituant le stator. Dans les conditions indiquées, le matériau ferromagnétique du rotor faisant face au stator est porté, au contraire, à la saturation, de sorte que le rotor se conduit par rapport aux variations du flux comme si ses pôles étaient constitués par des aimants permanents. La saturation du matériau ferromagnétique du rotor ne porte, d'autre côté, aucun inconvénient, dû au fait qu'il existe un contrôle vectoriel (en module et en phase) du courant d'alimentation du stator S, et donc le rotor est toujours sollicité d'une façon synchrone. A cette saturation du matériau ferromagnétique du rotor ne correspond d'autre part aucune saturation, même localisée (qui serait nuisible), du matériau ferromagnétique du stator, grâce au fait que la dimension d des cavités F ne dépasse pas cinq fois l'épaisseur t de l'entrefer T, de sorte que les lignes de flux, sortant avec une densité pratiquement uniforme du stator S, ont la possibilité de s'écarter en traversant l'entrefer T, pour se diriger vers les parties ferromagnétiques du rotor qui sont plus proches du point du stator duquel sortent les lignes de flux.

En des conditions de saturation, le deuxième effet utile de la présence des cavités F consiste en ce qu'elles opposent une grande réluctance aux circuits magnétiques parassitaires, tel que celui qui est indiqué par la ligne interrompue a, lesquels ont la tendance à s'établir en raison de la distribution de l'enroulement du stator S. Cela permet une meilleure utilisation du flux magnétique engendré et améliore le facteur de puissance de la machine.

La forme de réalisation suivant les figures 1 et 2 est particulièrement économique, mais elle n'autorise pas la réalisation de machines montrant un rapport élevé entre le couple utile et les dimensions de la machine. La forme de réalisation suivant les figures 3 et 4 est plus coûteuse, mais elle permet de réaliser des machines de prestations élevées.

Dans ce cas, le rotor a quatre pôles et il présente un arbre A qui s'étend en formant un support en croisillon ayant quatre bras A', entre lesquels est disposée une lamination axiale. L'arbre A avec le croisillon A' peut être d'acier normal parce que (contrairement à d'autres machines électriques de ce genre) il n'y a aucune exigence qu'il ne soit pas ferromagnétique; au contraire, son caractère ferromagnétique est avantageux, parce que les bras A' du croisillon sont disposés suivant les deux axes directs du rotor et, s'ils sont ferromagnétiques, ils contribuent à la perméance suivant ces directions. Dans les quatre cadrans définis par le croisillon A' sont insérées quatre laminations axiales courbes, dont la structure générale est bien connue pour ce type de machines, et qui comprennent nombre de tôles ferromagnétiques L alternées à des couches intercalaires I non ferromagnétiques. La caractéristique suivant l'invention réside, dans ce cas, en ce que les couches intercalaires I non ferromagnétiques, au lieu d'être limitées à une épaisseur moindre comme dans les structures connues, ont une épaisseur substantielle, au moins non inférieure aux 2/3 de l'épaisseur des tôles ferromagnétiques L, et en même temps l'épaisseur de chaque couche intercalaire I non ferromagnétique ne dépasse pas cinq fois l'épaisseur t de l'entrefer T de la machine.

Les couches intercalaires I peuvent être réalisées de différentes façons. Un mode de réalisation consiste à empiler des tôles ferromagnétiques L alternées à des tôles intercalaires I non ferromagnétiques, par exemple d'aluminium, ou bien à des feuilles intercalaires I non métalliques, par exemple constituées par un matériau synthétique approprié. Un autre mode de réalisation des couches intercalaires I consiste à disposer les tôles ferromagnétiques L dans les positions préfixées et ensuite injecter dans les espaces intercalaires un matériau non ferromagnétique, qui peut être par exemple de l'aluminium ou un matériau synthétique approprié.

Les couches intercalaires I non ferromagnétiques donnent lieu à une partialisation substantielle de la section du matériau ferromagnétique du rotor, dans le sens voulu par l'invention. Par conséquence dans ce mode de réalisation aussi, comme dans le précédent, à une induction engendrée dans le stator S de sorte à ne pas donner lieu à saturation correspond dans le rotor une induction telle à saturer les tôles ferromagnétiques L. En outre, en raison de l'épaisseur substantielle des couches intercalaires I non ferromagnétiques, la perméance suivant les axes de quadrature est bien plus réduite qu'elle ne pourrait résulter dans les formes de réalisation connues, ainsi assurant, à parité d'autres conditions, la production d'un couple utile plus grand. Dans ce cas aussi, le fait que l'épaisseur de chaque couche intercalaire I non ferromagnétique est inférieure à cinq fois l'épaisseur t de l'entrefer T de la machine permet aux lignes de flux de l'induction, qui sortent avec une densité pratiquement uniforme du stator S, de s'écarter en traversant l'entrefer T pour se diriger vers les régions les plus proches des tôles ferromagnétiques L, sans donner lieu à aucune concentration localisée d'induction appréciable dans le stator S. A différence de la forme de réalisation précédente, la présence des couches intercalaires I non ferromagnétiques dans les régions du rotor qui font face à l'entrefer T oppose une réluctance élevée aux circuits magnétiques parassitaires se développant en correspondance des axes de quadrature, même en l' absence d'une saturation, à savoir, aussi dans les conditions dans lesquelles la machine travaille avec un flux magnétique réduit.

Les éléments B qui se trouvent dans la partie centrale des laminations courbes L,I définissent les espaces interpolaires du rotor, et ils doivent être formés par un matériau non ferromagnétique; aux effets de l'invention n'a aucune importance que ce matériau soit conducteur ou bien isolant. Les éléments B peuvent participer activement à l'assemblage du rotor, en tenant fixèes au croisillon A' les laminations L,I. Cela peut être fait, d'une façon en soi connue (voir par exemple GB 1,114,562), en employant des boulons s'étendant des éléments B vers l'axe du rotor, et/ou au moyen de flasques ou d'anneaux d'extrémité disposés pour maintenir les éléments B. Il est avantageux si, comme il résuite de la figure 3, les bras A' du croisillon et, en correspondance, les laminations L,I, sont courbes suivant un quart de cercle dans leur partie centrale et sont substantiellement rectilignes dans les parties latérales à peu près perpendiculaires entre elles, parce qu'une telle conformation confère une épaisseur plus grande aux éléments B non ferromagnétiques et permet d'obtenir un rapport plus élevé entre la perméance suivant l'axe direct et la perméance suivant l'axe de quadrature, à parité d'extension de l'arc polaire. Il en résulte aussi une plus grande robustesse des éléments B, qui est utile lorsque ces éléments contribuent à l'assemblage de la structure du rotor.

En conséquence du facteur de partialisation élevé, on constate que dans un rotor à lamination axiale il est avantageux, par rapport à toutes les caractéristiques de la machine, d'établir une grande extension angulaire des pôles du rotor. Partant l'extension angulaire de chaque pôle, exprimée en termes d'angle électrique, est préférablement choisie non inférieure à 2 radiants.

Une structure qui correspond en principe à celle décrite peut être réalisée, pour des machines ayant plus de 4 pôles, à savoir 2.n pôles où n est plus grand que 2, en prévoyant les bras de support A' de l'arbre A en nombre de 2.n et en conformant les laminations avec une courbe qui s'étend pour 1/n d'angle plat et est continuée des deux côtés par des tronçons rectilignes substantiellement parallèles des axes directs adjacents.

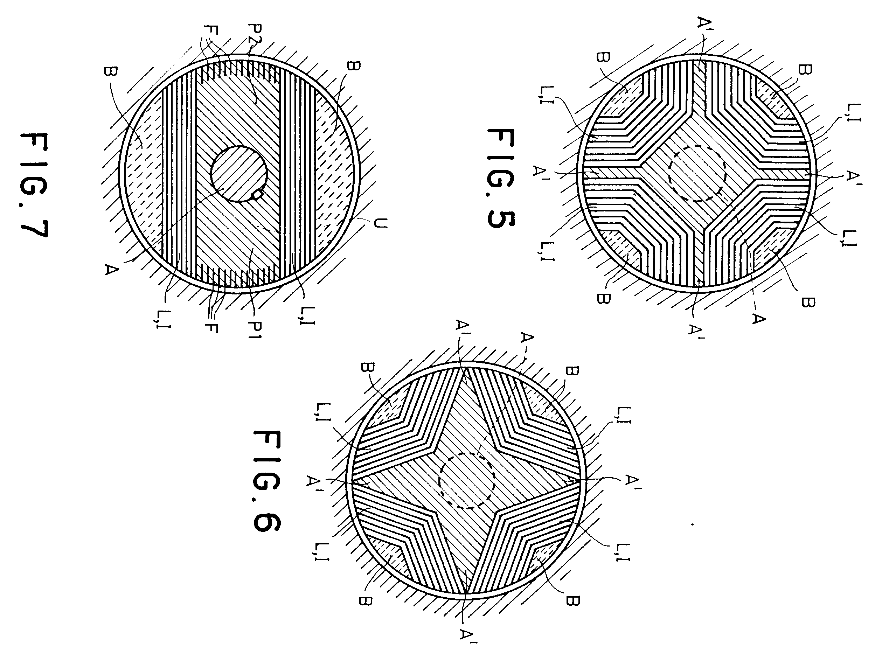

Toutefois il n'est pas nécessaire que les laminations L,I soient pourvues de parties courbes. Pour des raisons de construction, au contraire, il peut être préférable de donner aux laminations une forme polygonale, par exemple comme le montre la figure 5; la structure qui y est montrée peut être considérée comme opérativement équivalente à la structure suivant la figure 3.

Une simplification constructive peut être réalisée en donnant aux laminations une forme en dièdre, comme le montre la figure 6. Dans ce cas les bras de support A' de l'arbre A forment dans leur ensemble une figure stellaire. Bien entendu, aussi des structures suivant les figures 5 et 6 l'on peut dériver des structures correspondantes du rotor pour des machines ayant plus que 4 pôles; plus particulièrement, la structure suivant la figure 6 est considérée spécialement appropriée pour des machines ayant un grand nombre de pôles.

Enfin, la figure 7 illustre comme les caractéristiques montrées par la figure 1 pour un rotor massif peuvent être combinées avec les caractéristiques montrées par les figures 3 à 6 pour un rotor à lamination axiale. Le rotor U de la figure 7 est à deux pôles, et il présente deux pôles saillants massifs P1 et P2 ayant des cavités F faisant face à l'entrefer T, de façon similaire à ce qui est montré par la figure 1. Deux laminations axiales L,I, dans ce cas plates, sont appliquées des deux côtés des pôles saillants P1 et P2, et elles sont tenues par des éléments non ferromagnétiques B définissant les espaces interpolaires. On doit entendre que des structures illustrées par les figures 1 et 7 pour un rotor à deux poles on peut dériver des structures correspondantes pour des machines ayant plus que deux pôles.

Comme on le comprend par ce qui précède, l'association des deux principes qui sont à la base de l'invention: l'adoption d'un contrôle vectoriel du courant d'alimentation pour une machine à réluctance, et la partialisation substantielle de la section du matériau ferromagnétique inclus dans le rotor, dans les conditions indiquées, donne la possibilité de réaliser des machines de construction simple et économique, robustes et ayant des caractéristiques élevées, qui se prêtent pour être employées en des applications pour lesquelles les machines à réluctance n'étaient pas appropriées jusqu'ici. En particulier, l'on peut prévoir des applications utiles de ces machines comme moteurs asservis, comme moteurs pour machines outils, comme moteurs de traction pour des véhicules électriques, et ainsi de suite, en remplacement de moteurs à courant continu, de moteurs sans balais et d'autres machines électriques, avec l'avantage particulier de présenter un rotor non enroulé ni présentant des aimants permanents et qui ne se réchauffe pas.

Les formes de réalisation des machines suivant l'invention sont essentiellement variables tout en respectant les conditions exposées, et cela autorise la réalisation de machines particulièrement appropriées aux différentes applications.

## Revendications

1. Machine électrique à réluctance, avec un rotor (U) comprenant des éléments en matériau ferromagnétique, inséré dans un stator (S) pourvu d'enroulements électriques et séparé de lui par un entrefer (T), et dans lequel la section des éléments (P1,P2; L) de matériau ferromagnétique du rotor, au moins à proximité de l'entrefer (T), est partialisée par l'insertion d'éléments (F; I) de matériau non ferromagnétique, caractérisé en ce que lesdits éléments (P1,P2;L;F;I) sont disposés de sorte à réaliser un rapport entre la section de matériau ferromagnétique et la section totale non supérieur à 0,6, avec un rapport entre au moins une dimension linéaire (d) des éléments de matériau non ferromagnétique, gîsant dans un plan tangent à l'entrefer (T), et l'épaisseur (t) de l'entrefer de la machine, non supérieur à 5.

2. Machine électrique suivant la revendication 1, caractérisée en ce que les enroulements électriques (W) dudit stator (S) sont alimentés moyennant un circuit électronique (C) de contrôle vectoriel (en module et en phase) du courant d'alimentation.

3. Machine électrique suivant la revendication 1, caractérisée en ce que, avec un rotor de type massif à pôles saillants (P1,P2, figure 1), la partialisation est due à la présence de petites cavités (F) pratiquées dans les surfaces du rotor (U) qui font face à l'entrefer (T).

4. Machine électrique suivant la revendication 1, avec un rotor (U, figure 3) à lamination axiale, dans lequel ladite partialisation est due au fait que la lamination est constituée par des tôles (L) de matériau ferromagnétique alternées à des couches intercalaires (I) de matériau non ferromagnétique, caractérisée en ce que lesdites couches intercalaires (I) ont une épaisseur non inférieur aux 2/3 de l'épaisseur des tôles de matériau ferromagnétique, l'épaisseur de chaque couche intercalaire (I) non ferromagnétique étant inférieur à cinq fois l'épaisseur de l'entrefer (T) de la machine.

5. Machine électrique suivant la revendication 4, caractérisée en ce que l'arbre (A) du rotor (U) est constitué par un matériau ferromagnétique et qu'il s'étend à former des bras (A') pour supporter les laminations (L,I), tandis que les espaces interpolaires sont occupés par des éléments (B) en matériau non ferromagnétique.

6. Machine électrique suivant la revendication 5, ayant un rotor (U, figure 3) avec 2.n pôles, caractérisée en ce que ledit arbre (A) s'étend à former 2.n bras de support (A'), et que lesdits bras et les laminations (L,I) comprennent, en section, une partie centrale courbée substantiellement sur 1/n d'un angle plat, à laquelle partie centrale font suite des parties latérales substantiellement rectilignes, à peu près parallèles des axes directs du rotor.

7. Machine électrique suivant la revendication 5, ayant un rotor (U, figure 5) avec 2.n pôles, caractérisée en ce que ledit arbre s'étend à former 2.n bras de support (A'), et que lesdits bras et les laminations (L,I) comprennent, en section, une partie centrale substantiellement polygonale, se terminant par des parties latérales substantiellement rectilignes, à peu près parallèles des axes directs du rotor.

8. Machine électrique suivant la revendication 5, avec un rotor (U, figure 6) ayant 2.n pôles, caractérisée en ce que ledit arbre s'étend à former une étoile ayant 2.n bras de support (A'), et que lesdites laminations (L,I) ont la forme de dièdres ayant, en section, les sommets situés sur les axes de quadrature et les côtés dirigés vers les axes directs du rotor.

9. Machine électrique suivant la revendication 4, caractérisée en ce que chaque pôle du rotor (U) a une extension, exprimée en termes d'angle électrique, non inférieure à 2 radiants.

## Claims

1. A reluctance electric machine having a rotor (U) including ferromagnetic material members, inserted in a stator (S) provided with electric windings and separated therefrom by an air gap (T), and wherein the cross section of the ferromagnetic material members (P1,P2; L) of said rotor, at least near the air gap (T), is decreased by the insertion of members (F; I) of non-ferromagnetic material, characterized in that said members (P1,P2; L; F; I) are arranged in such a way that the ratio between the ferromagnetic material cross section and the whole cross section available does not exceed 0.6, and the ratio between at least one linear dimension (d) of the non-ferromagnetic material members, lying in a plane tangent to the air gap (T), and the thickness (t) of the machine air gap, does not exceed 5.

2. An electric machine as set forth in Claim 1, characterized in that the electric windings (W) of said stator (S) are fed by means of an electronic circuit (C) for vectorial control (in module and phase) of the feed current.

3. An electric machine as set forth in Claim 1, characterized in that, with a massive rotor with salient poles P1,P2, figure 1), said decrease is due to the presence of are little cavities (F) hollowed in the surfaces of the rotor (U) which face the air gap (T).

4. An electric machine as set forth in Claim 1, with a rotor (U, figure 3) having axial laminations, in which said decrease is due to the laminations comprising ferromagnetic sheets (L) alternate with non-ferromagnetic intercalary layers (I), characterized in that said intercalary layers (I) have a thickness of at least 2/3 of the thickness of each ferromagnetic sheet, and the thickness of each said intercalary layer (I) does not exceed 5 times the thickness of said machine air gap (T).

5. An electric machine as set forth in Claim 4, characterized in that said the shaft (A) of rotor (U) is of ferromagnetic material and it extends forming some arms (A') supporting said laminations (L,I), whereas the interpolar spaces are occupied by members (B) of non-ferromagnetic material.

6. An electric machine as set forth in Claim 5, with a rotor (U, figure 3) having 2.n poles, characterized in that said shaft (A) extends forming 2.n supporting arms (A'), and said arms and the laminations (L,I) each have, in section, a central portion curved substantially through 1/n of a plane angle, to which central portion follow lateral portions substantially straight being nearly parallel to the direct axes of the rotor.

7. An electric machine as set forth in Claim 5, with a rotor (U, figure 5) having 2.n poles, characterized in that said shaft (A) extends forming 2.n supporting arms (A'), and said arms and the laminations (L,I) each have, in section, a central portion of substantially polygonal shape, ending with lateral portions substantially straight being nearly parallel to the direct axes of the rotor.

8. An electric machine as set forth in Claim 5, with a rotor (U, figure 6) having 2.n poles, characterized in that said shaft extends forming a star-shaped figure having 2.n supporting arms (A'), and each said lamination (L,I) has the shape of a dihedron whose vertex, in section, is located on a quadrature axis and whose sides are oriented towards the direct axes of the rotor.

9. An electric machine as set forth in Claim 4, characterized in that each pole of rotor (U) has a length, expressed in terms of electric angle, of at least 2 radiants.

## Patentansprüche

1. Elektrische Reluktanzmaschine mit einem Rotor (U), der Elemente aus ferromagnetischem Material umfasst und in einem Stator (S) eingesetzt ist, der mit elektrischen Wicklungen versehen und durch einen Luftspalt (T) vom Rotor getrennt ist, wobei der Querschnitt der Rotorelemente (P1,P2; L) aus ferromagnetischem Material wenigstens in der Nähe des Luftspaltes (T) durch den Einsatz von Elementen (F; I) aus nicht-ferromagnetischem Material verkleinert ist, dadurch gekennzeichnet, dass die Elemente (P1,P2; L; F; I) so angeordnet sind, dass zwischen dem Querschnitt des ferromagnetischen Materials und dem Gesamtquerschnitt ein Verhältnis von nicht mehr als 0,6 entsteht, wobei das Verhältnis zwischen wenigstens einer innerhalb einer zum Luftspalt (T) tangential verlaufenden Ebene liegenden Längenabmessung (d) der Elemente aus nicht-ferromagnetischem Material und der Breite (t) des Luftspaltes der Maschine nicht mehr als 5 beträgt.

2. Elektrische Maschine nach Anspruch 1, dadurch gekennzeichnet, dass der den elektrischen Wicklungen (W) des Stators (S) zugeführte Speisestrom über eine elektronische Steuerschaltung (C) mit Vektorfunktion (Modul- und Phasensteuerung) gesteuert wird.

3. Elektrische Maschine nach Anspruch 1, dadurch gekennzeichnet, dass bei einem Rotor mit massivem Aufbau und Schenkelpolen (P1,P2, Figur 1) die Verkleinerung durch kleine in den dem Luftspalt (T) gegenüberliegenden Flächen des Rotors (U) ausgebildeten Aussparungen (F) gegeben ist.

4. Elektrische Maschine nach Anspruch 1, mit einem Rotor (U, Figur 3) mit axial lamelliertem Aufbau, bei dem die Verkleinerung dadurch gegeben ist, dass der lamellierte Aufbau aus sich mit Zwischenschichten (I) aus nicht-ferromagnetischem Material abwechselnden Blechen (L) aus ferromagnetischem Material besteht, dadurch gekennzeichnet, dass die Dicke der Zwischenschichten (I) nicht weniger als 2/3 der Dicke der Bleche aus ferromagnetischem Material beträgt, wobei die Dicke jeder nicht-ferromagnetischen Zwischenschicht (I) weniger als das Fünffache der Breite des Luftspaltes (T) der Maschine beträgt.

5. Elektrische Maschine nach Anspruch 4, dadurch gekennzeichnet, dass die Welle (A) des Rotors (U) aus einem ferromagnetischem Material besteht und in ihrer räumlichen Ausdehnung Arme (A') bildet, die die Lamellen (L,I) tragen, während sich in den Räumen zwischen den Polen Elemente (B) aus nicht-ferromagnetischen Material befinden.

6. Elektrische Maschine nach Anspruch 5, mit einem Rotor (U, Figur 3) mit 2.n Polen, dadurch gekennzeichnet, dass in ihrer räumlichen Ausdehnung die Welle (A) 2.n Tragarme (A') bildet und dass diese Arme sowie die Lamellen (L,I) im Querschnitt einen sich im wesentlichen um 1/n eines gestreckten Winkels biegeden mittleren Teil aufweisen, dem sich im wesentlichen geradlinige, annähernd parallel zu den direkten Rotorachsen verlaufende Seitenteile anschliessen.

7. Elektrische Maschine nach Anspruch 5, mit einem Rotor (U, Figur 5) mit 2.n Polen, dadurch gekennzeichnet, dass in ihrer räumlichen Ausdehnung die Welle 2.n Tragarme (A') bildet und dass diese Arme sowie die Lamellen (L,I) im Querschnitt einen im wesentlichen vieleckigen mittleren Teil aufweisen, der mit im wesentlichen geradlinigen, annähernd parallel zu den direkten Rotorachsen verlaufenden Seitenteilen endet.

8. Elektrische Maschine nach Anspruch 5, mit einem Rotor (U, Figur 6) mit 2.n Polen, dadurch gekennzeichnet, dass in ihrer räumlichen Ausdehnung die Welle einen Stern mit 2.n Tragarmen (A') bildet und dass die Lamellen (L,I) die Form von Zweiflächen haben, deren Scheitel im Querschnitt auf den Quadraturachsen liegen und deren Seiten den direkten Rotorachsen zugekehrt sind.

9. Elektrische Maschine nach Anspruch 4, dadurch gekennzeichnet, dass jeder Pol des Rotors (U) eine im Sinne eines elektrischen Winkels ausgedrückte räumliche Ausdehnung von nicht weniger als 2 Radianten hat.
